Europäisches Patentamt

European Patent Office

Office européen des brevets

(11) Publication number: **0 083 954**
**B1**

(12) **EUROPEAN PATENT SPECIFICATION**

(45) Date of publication of patent specification: **16.04.86**

(51) Int. Cl.⁴: **F 28 F 1/42, B 01 D 53/26**

(21) Application number: **83200019.4**

(22) Date of filing: **06.01.83**

(54) **A heat exchanger, a method for manufacturing the same, and a gas drier provided with such a heat exchanger.**

(30) Priority: **08.01.82 NL 8200058**

(43) Date of publication of application:
**20.07.83 Bulletin 83/29**

(45) Publication of the grant of the patent:
**16.04.86 Bulletin 86/16**

(84) Designated Contracting States:
**AT BE CH DE FR GB IT LI LU NL SE**

(56) References cited:
**FR-A-2 061 500**
**GB-A- 371 608**
**GB-A- 430 015**
**GB-A-1 249 757**
**US-A-2 331 437**
**US-A-3 197 975**
**US-A-3 217 392**
**US-A-4 242 100**
**US-A-4 253 315**

(73) Proprietor: **Droogtechniek en Luchtbehandeling B.V.**
**Westrik 17**
**NL-4841 BM Prinsenbeek (NL)**

(72) Inventor: **Cazemier, Pieter Gerard**
**Kerkewei 27**
**NL-4841 XS Prinsenbeek (NL)**

(74) Representative: **Mommaerts, Johan Hendrik, Dipl.-Phys.**
**Octrooibureau Lux Willem Witsenplein 4**
**NL-2596 BK Den Haag (NL)**

Courier Press, Leamington Spa, England.

## Description

The invention relates to a method for manufacturing a heat exchanger, in which a tube, which, in the assembled heat exchanger, separates two flow spaces for different heat-exchange media, is provided at its outer and inner side with heat conducting metallic elements in the form of loops extending into the space in question, said elements being permeable for said media, and being attached to said tube in a heat conducting manner, in particular by soldering.

Such a method is known from GB—A—371 608 (1931), and the heat conducting elements shown therein consist of wire gauze or wire mesh. According to said prior disclosure, long strips of wire gauze or mesh are bent in loops which are soldered to the outer and inner surface resp. of a partition tube. A draw-back of mesh material is that its heat conductivity and mechanical strength are relatively low, and that such loops cannot be provided in a continuous manner since their axial length is limited by the length of said strips. A heat exchanger in which the outer loops are to be surrounded by an outer tube so as to define, together with said partition tube, an elongated flow channel, cannot be made in this manner since the gauze or mesh loops have an insufficient strength for supporting the inner structure in a centered way, and, moreover, such gauze or mesh loops are, then, directed in the axial direction, and the fluid flowing in the channel in question will not flow through but only along said loops, which reduces the heat-transfer.

It has been known for a long time, i.e. from US—A—877 252 (1908), that, for the latter purpose, wire loops of a metal with a high heat conductivity such as copper are suitable, which loops are soldered on a metal partition wall, in particular a copper tube, and are, more particularly, bent from a continuous wire to form a loop hose which is helically wound around the tube and is soldered thereto. The advantage thereof is that the loops can be formed in a continuous operation. Such loops have a much better shape stability than protruding pins of a comparable thickness. A further advantage is that the liquid can flow along such loops at all sides, so that a large heat transfer surface area is provided without substantially increasing the flow resistance. A device for providing such wire loops is described in NL—C—145 783.

Such heat exchangers are generally used for central heating purposes, and then hot water is flowing through the tube, and the wire loops are contacting the ambient air, said heat exchanger then being generally mounted within a casing connecting with the space to be heated, and within said casing an air flow brushing along said wire loops is created by heating the air. From NL—C—155 164 such a heat exchanger designed for air heating is known, and therein the tube only serves as a carrier for the wire loops, an electric heating wire being arranged between said loops.

In such a water/air heat exchanger, in fact, only the heat transfer towards the air is a determining factor for the operation, since the dimensions of such heat exchangers are, generally, so that the heat transfer from the water flowing through the tube is sufficient for the envisaged purpose. It has, however, appeared that, for other applications, a need exists for a still further improvement of the heat transfer, in particular in view of a reduction of the dimension of the heat exchangers and an adaptation of the operation thereof to widely differing working conditions.

Such wire loops are sufficiently stiff for supporting the partition tube in an outer tube, and a fluid flowing axially between said tubes will contact said loops in an optimal way. However the inner side of said partition tube cannot be provided with such wire loops in the manner shown in the latter prior disclosure.

US—A—3 217 392 shows a method for providing helical wire-loop coils inside a rather wide tube by providing a wire mesh hose on the outer side of the wire loops, which hose is elastically flexible and bridges the gap between the wire loops and the tube wall. However such a wire mesh hose has a relatively low heat conductivity and, in the case of narrower tubes or flow passages, will reduce the useful flow space.

The invention provides a method for manufacturing a heat-exchanger of the kind specified above, which is characterised in that a continuous metallic wire which is coiled to form a continuous series of wire loops is wound on an inner core element in such a manner that the outer diameter of said wound loops is substantially equal to the inner diameter of said partition tube, in that solder is provided on the outer sides of said loops, in that the assembly of the core element and the wire loops is inserted into said partition tube, on the outer wall of which similar wire loops are wound, said loops having an outer diameter which is substantially equal to the inner diameter of an outer tube, and being provided with solder in the points contacting said partition tube, in that said loops are soldered to said partition tube by applying heat to the coil parts provided with solder, and in that the assembly of said partition tube, said core element and said wire loops is inserted into said outer tube.

In this manner both wire-loop coils can be wound by means of a known device.

In particular soldering to the partition tube can be done simultaneously, so that there is no risk that previously made solder connections will be damaged by reheating.

Preferably the inner loops are fixed to said core element before being inserted into said partition tube, thus avoiding that the coils will shift during insertion.

The invention further provides a heat-exchanger, manufactured by means of this method, comprising a partition tube separating two flow spaces for heat-exchange media, said tube being provided at its inner and outer sides with heat conducting metallic elements extending into the spaces in question, said elements being permeable for said media, and being attached to said tube in a heat conducting manner, in particular by soldering, which heat-exchanger is characterised in that the outer and inner elements both consist of wire loops forming part of continuously coiled metallic wires, which loops are soldered to the outer and inner walls respectively of said partition tube, and in that said outer wire loops are surrounded by an outer tube defining, with said partition tube, an outer flow channel.

In particular a core element, in particular an inner tube, is arranged within and is contacting said inner loops.

Preferably the inner loops are attached to said core element.

Such a heat-exchanger is particularly suitable for a gas dryer, comprising a compression pump for a cooling medium vapour, an expansion valve for throttling the expanding compressed vapour, and an evaporator connected to said valve, in which the expanding vapour can enter into interaction with the gas to be treated in order to extract heat therefrom, the outflow end of said evaporator being connected to the suction side of said pump, in which cycle, furthermore, a cooler is included for removing the heat generated when compressing the cooling medium vapour.

In particular this gas dryer is characterised in that the cooling medium vapour is led through the inner channel in the same sense as the gas is led through the outer channel, the cross-section of the inner channel and the density of the wire loops therein being so that the flow resistance of the cooling medium vapour will increase so much in respect of that of the substantially liquid cooling medium that at increasing evaporation as a consequence of an increasing load the outflow temperature of the gas flow will substantially always have the same value.

In such a coaxial construction of the heat exchanger the inner tube can also be used for returning the cooling medium flowing off from the inner channel.

The invention will be elucidated below in more detail by reference to a drawing, showing in:

Fig. 1 a lateral view with parts broken away of an embodiment of a heat exchanger according to the invention;

Fig. 2 a front view of this heat exchanger;

Fig. 3 a diagrammatical representation of a part of an air dryer with a heat exchanger of Figs. 1 and 2; and

Fig. 4 a graphic representation of the distribution of the temperature within the heat exchanger of Fig. 3.

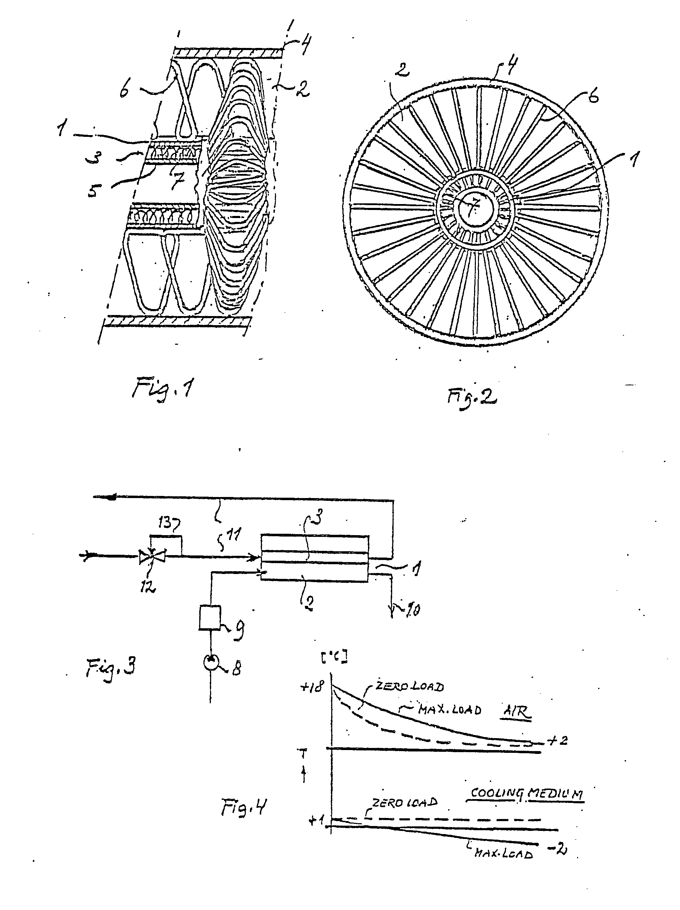

The heat exchanger according to the invention shown in Figs. 1 and 2 is, in particular, designed for drying compressed air or the like by cooling by means of a suitable cooling medium, as will be elucidated below in more detail. The invention is, however, not restricted to such an application.

This heat exchanger comprises a partition tube 1 separating a channel 2 for air to be dried from a channel 3 for the cooling medium, which tube consists of a metal with a high heat conductivity such as copper. The channel 2 is, on the other hand, defined by an outer tube 4, and the inner channel 3 by an inner tube 5. These tubes 4 and 5 do not take part in the heat transfer, and can be made of any desired material.

On the partition tube 1 wire loops 6 of a good heat conducting metal such as copper are fixed by soldering, so that a good heat conduction from the loops towards the tube 1 is ensured. These loops are of the kind described in US—A—877 252. The shape of these loops can for example, be rectangular or trapezoidal or the like.

These loops consist of a continuous wire, and are arranged along helicoidal lines around the tube 1, and, as shown, the loops of adjacent screw turns can mutually interlock. A method for manufacturing such loop rows is described in NL—C—145 783.

Although not necessary per se, the loops extend up to the outer tube 4, so as to center the partition tube 1 in respect of the outer tube 4. It is, as such, not required to solder the loops to the outer tube, but the outer tube can be fixed, if required, by means of some solder tacks.

At the inner side of the tube 1 wire loops 7 are provided in the channel 3 too, which are soldered to the tube 1 as well. These loops extend up to the inner tube 5 so that the latter is centred thereby. The inner tube is, as such, not required, but it is simpler to fix, initially, the loops 7 on the inner tube 5 and to solder them subsequently to the partition tube 1. If required an auxiliary core can be used instead of the inner tube which can be subsequently removed if required.

Fig. 3 shows an application of this heat exchanger for drying compressed air. The air is sucked in by a pump 8 and is cooled in a cooler 9, and is, subsequently, supplied to the outer channel 2 of a heat exchanger according to Fig. 1. The loops 6 arranged in this channel provide a good heat discharge towards the partition wall 1, and, at the same time, turbulences are produced in the air flow which break possibly present laminar flows which might shield the heat discharge surfaces. The compressed air dried by cooling is led off at 10 towards a suitable pressure vessel.

The channel 3 within the partition tube 1 is inserted in a duct 11 forming part of a cooling medium cycle of current design, in which an expansion valve 12 with pressure regulator 13 is inserted. The remaining elements of this cycle are not shown. In this cycle a cooling medium such as freon can be circulated, which is supplied under a high pressure to the valve 12 and is allowed to expand therein, the pressure at the outflow side of said valve being maintained at a constant value corresponding to a definite desired temperature. The flow sense in the inner channel 3 is, then, the same as in the outer channel 2.

By reference to Fig. 4 the operation of this heat exchanger will be further explained. In the zero-load condition, i.e. when no or very little air is delivered by the pump 8, substantially no heat will be supplied to the cooling medium flowing through the inner channel 3. Therefore substantially no evaporation of cooling medium will take place, so that the latter will flow through the channel 3 as a liquid having an outflow temperature which is substantially the same as the inflow temperature, e.g. +1°C. This is indicated by a horizontal interrupted line in the lower part of Fig. 4. The flow resistance caused by the wire loops 7 in the channel 3 and by the walls 1 and 2 thereof has a definite value suitable for this purpose.

The small amount of air flowing through channel 4, having for instance a temperature of 18°C, is quickly cooled to a little above the temperature of the cooling medium, e.g. +2°C, at which temperature no freezing of water vapour present in the air will take place. However the cooling brings about condensation of possibly present water vapour as water, which can be removed from the heat exchanger by means of a suitable tapping opening.

In the maximum-load condition, when the maximum amount of air flows through the channel 2, the final temperature of the air should be substantially the same as in the case of zero-load. However much heat is to be removed then, so that a considerable evaporation will take place in channel 3, and care should be taken to ensure that the cooling medium supply is adapted to the maximum-load demand. The evaporation leads to an increase in volume, and therefore to an increase in velocity of the formed mixture, so that also the flow velocity will increase, which has as a consequence that the outflow pressure, and therefore the outflow temperature, decrease. This is shown in Fig. 4 by a continuous line.

The wire loops 7 not only provide a uniformly distributed heat supply, but also contribute to the flow becoming turbulent which enhances the heat transfer and increases the flow resistance. As follows from Fig. 4, the outflow temperature of the cooling medium at maximum load decreases to about −2°C, which is sufficient for discharging the maximum-load airflow again at about 2°C.

It has appeared to be possible to adjust the flow resistance distribution at different load values by a suitable choice of the width of the channel 3 and of the density of the wire loops 7 in such a manner that under all circumstances substantially the same outflow temperature of the air is obtained. Since the heat transfer is considerably improved by the wire loops 6 and 7, the dimensions of such a heat exchanger can be reduced accordingly.

In a heat exchanger type being taken as an example, the inner diameter of the outer tube 4 is about 60 mm and the outer diameter of the partition tube about 30 mm, the width of the channel 3 being, for instance, 3.5 mm, depending on the capacity of the device. The length of the heat exchanger should, then, not be larger than 1000 mm. Such a heat exchanger requires, therefore, little space.

The interior of the inner tube 5 can, for instance, be used for returning the cooling medium, which can sometimes be favourable in view of space economy and possible heat losses.

It will be clear that the invention is not restricted to the described embodiments.

Since the loops 7 have a smaller height than the loops 6, the former can be wound with a smaller pitch than the latter if this is required in view of the flow resistance to be obtained in the channel 3. Generally the pitch of the loop strings 7 is not chosen larger than that of the loops 6.

Soldering the loops 6 and 7 to the tube 1 takes preferably place simultaneously by heating the tube, solder being provided beforehand, e.g. in the manner described in US—A—3 217 392.

**Claims**

1. A method for manufacturing a heat exchanger, in which a partition tube (1), which, in the assembled heat exchanger, separates two flow spaces (2, 3) for different heat-exchange media, is provided at its outer and inner side with heat conducting metallic elements (6, 7) in the form of loops extending into the space in question (2, 3), said elements being permeable for said media, and being attached to said tube (1) in a heat conducting manner, in particular by soldering, characterised in that a continuous metallic wire which is coiled to form a continuous series of wire loops (7) is wound on an inner core element (5) in such a manner that the outer diameter of said wound loops is substantially equal to the inner diameter of said partition tube (1), in that solder is provided on the outer sides of said loops (7), in that the assembly of the core element (5) and the wire loops (7) is inserted into said partition tube (1), on the outer wall of which similar wire loops are wound, said loops (6) having an outer diameter which is substantially equal to the inner diameter of an outer tube (4), and being provided with solder in the points contacting said partition tube (1), in that said loops (6, 7) are soldered to said partition tube (1) by applying heat to the coil parts provided with solder, and in that the assembly of said partition tube (1), said core element (5) and said wire loops (6, 7) is inserted into said outer tube (4).

2. The method of claim 1, characterised in that the solder points of adjacent inner and outer coils (6, 7) are simultaneously heated.

3. The method of claim 1 or 2, characterised in that the inner loops (7) are fixed to said core element (5) before being inserted into said partition tube (1).

4. A heat exchanger, manufactured by means of the method of any one of claims 1—3, comprising a partition tube (1) separating two flow spaces (2, 3) for heat-exchange media, said tube (1) being provided at its inner and outer sides with heat conducting metallic elements (6, 7) extending into the spaces in question (2, 3), said elements (6, 7) being permeable for said media, and being attached to said tube in a heat conducting manner, in particular by soldering, characterised in that the outer and inner elements (6, 7) both consist of wire loops forming part of continuously coiled metallic wires, which loops (6, 7) are soldered to the outer and inner walls respectively of said partition tube (1), and in that said outer wire loops (6) are surrounded by an outer tube (4) defining, with said partition tube (1), an outer flow channel (2).

5. A heat exchanger of claim 4, characterised in that a core element (5), in particular an inner tube, is arranged within and contacting said inner loops (7).

6. The heat exchanger of claim 5, characterised in that the inner loops (7) are attached to said core element (5).

7. A gas dryer, comprising a compression pump (8) for a cooling medium vapour, an expansion valve (12) for throttling the expanding compressed vapour, and an evaporator connected to said valve, in which the expanding vapour can enter into interaction with the gas to be treated in order to extract heat therefrom, the outflow and of said evaporator being connected to the suction side of said pump, in which cycle, furthermore, a cooler (9) is included for removing the heat generated when compressing the cooling medium vapour, characterised in that the evaporator is formed by the heat exchanger of any one of claims 4 to 6.

8. The gas dryer of claim 7, characterised in that the cooling medium vapour is led through the inner channel (3) in the same sense as the gas is led through the outer channel (2), the cross-section of the inner channel (3) and the density of the wire loops (7) therein being so that the flow resistance of the cooling medium vapour will increase so much in respect of that of the substantially liquid cooling medium that at increasing evaporation as a consequence of an increasing load the outflow temperature of the gas flow will substantially always have the same value.

**Revendications**

1. Procédé de fabrication d'un échangeur de chaleur, dans lequel un tube de séparation (1), qui, dans l'échangeur de chaleur assemblé, sépare deux espaces de circulation (2, 3) pour des fluides différents en échange de chaleur, comporte sur son côté extérieur et son côté intérieur des éléments métalliques (6, 7) conducteurs de la chaleur, sous la forme de boucles s'étendant dans l'espace en question (2, 3), lesdits éléments étant perméables auxdits fluides, et fixées au tube (1) d'une manière conductrice de la chaleur, en particulier par brasage, caractérisé en ce qu'un fil métallique continu, qui est bobiné de manière à former une série continue de boucles de fil (7), est enroulé sur un élément de noyau intérieur (5) de sorte que le diamètre extérieur desdites boucles enroulées est sensiblement égal au diamètre intérieur du tube de séparation (1), en ce que de la brasure est appliquée sur les côtés extérieurs des boucles (7), en ce que l'ensemble de l'élément de noyau (5) et des boucles de fil (7) est inséré dans le tube de séparation (1), sur la paroi extérieure duquel des boucles de fil similaires sont enroulées, ces boucles (6) ayant un diamètre extérieur qui est sensiblement égal au diamètre intérieur d'un tube extérieur (4), et sont pourvues de brasure aux points venant en contact avec le tube de séparation (1), en ce que les boucles (6, 7) sont brasées au tube de séparation (1) par application de chaleur aux parties bobinées munies de brasure, et en ce que l'ensemble du tube de séparation (1), de l'élément de noyau (5) et des boucles de fil (6, 7) est inséré dans le tube extérieur (4).

2. Procédé suivant la revendication 1, caractérisé en ce que les points de brasage des boucles intérieures et extérieures (6, 7) adjacentes sont chauffés simultanément.

3. Procédé suivant la revendication 1 ou 2, caractérisé en ce que les boucles intérieures (7) sont fixées à l'élément de noyau (5) avant d'être insérées dans le tube de séparation (1).

4. Echangeur de chaleur, fabriqué par le procédé suivant l'une quelconque des revendications 1 à 3, comprenant un tube de séparation (1) qui sépare deux espaces de circulation (2, 3) pour des fluides en échange de chaleur, ledit tube (1) comportant sur son côté intérieur et son côté extérieur des éléments métalliques (6, 7) conducteurs de la chaleur qui s'étendent dans les espaces correspondants (2, 3), ces éléments (6, 7) étant perméables auxdits fluides, et qui sont fixés audit tube d'une manière conductrice de la chaleur, en particulier par brasage, caractérisé en ce que les éléments extérieurs et intérieurs (6, 7) sont tous deux constitués par des boucles de fil faisant partie de fils métalliques bobinés en continu, lesdites boucles (6, 7) étant brasées aux parois extérieure et intérieure respectivement du tube de séparation (1), et en ce que les boucles de fil extérieures (6) sont entourées par un tube extérieur (4) définissant, avec le tube de séparation (1), un canal extérieur (2) de circulation.

5. Echangeur de chaleur suivant la revendication 4, caractérisé en ce qu'un élément de noyau (5), en particulier un tube intérieur, est disposé à l'intérieur des boucles intérieures (7) et en contact avec celles-ci.

6. Echangeur de chaleur suivant la revendication 5, caractérisé en ce que les boucles intérieures (7) sont fixées à l'élément de noyau (5).

7. Sécheur de gaz, comprenant un compresseur (8) de vapeur de fluide de refroidissement, un détendeur (12) d'étranglement de la vapeur comprimée à détendre et un évaporateur raccordé à ce détendeur, dans lequel la vapeur détendue peut entrer en interaction avec le gaz à traiter afin d'en extraire de la chaleur, la sortie de l'évaporateur étant raccordée à l'aspiration du compresseur, un dispositif refroidisseur (9) étant en outre inclus dans ce circuit pour éliminer la chaleur engendrée par la compression de la vapeur de fluide de refroidissement, caractérisé en ce que l'évaporateur est constitué par l'échangeur de chaleur suivant l'une quelconque des revendications 4 à 6.

8. Sécheur de gaz suivant la revendication 7, caractérisé en ce que la vapeur de fluide de refroidissement circule dans le canal intérieur (3) dans le même sens que le gaz circule dans le canal extérieur (2), la section transversale du canal intérieur (3) et la densité des boucles de fil (7) dans ce canal étant telles que la résistance à l'écoulement de la vapeur de fluide de refroidissement augmente, par rapport à celle du fluide de refroidissement sensiblement liquide, de sorte que, pour une évaporation accrue résultant d'une charge accrue, la température de sortie du flux de gaz conserve toujours sensiblement la même valeur.

## Patentansprüche

1. Verfahren zur Herstellung eines Wärmetauschers, bei dem ein Trennrohr (1), das bei zusammengebauten Wärmetauscher zwei Fließräume (2, 3) für verschiedene Wärmeaustauschmittel trennt, an seiner Außen- und Innenseite mit wärmeleitenden Metallelementen (6, 7) in Form von Windungen versehen ist, die sich in den betreffenden Raum (2, 3) erstrecken, wobei diese Elemente für die Mittel durchlässig und in wärmeleitender Form, insbesondere durch Löten, am Rohr (1) befestigt sind, dadurch gekennzeichnet, daß ein kontinuierlicher Metalldraht, der gewunden ist und so eine kontinuierliche Reihe von Drahtwicklungen (7) bildet, so um ein inneres Seelenelement (5) gewickelt wird, daß der äußere Durchmesser der Wicklungen im wesentlichen dem inneren Durchmesser des Trennrohres (1) gleich ist, das Lot auf den Außenseiten der Wicklungen (7) vorgesehen wird, daß die Einheit aus Seelenelement (5) und Drahtwicklungen (7) in das Trennrohr (1) eingeschoben wird, auf dessen Außenwand ähnliche Wicklungen gewickelt sind, wobei die Wicklungen (6) einen äußeren, im wesentlichen dem inneren Durchmesser eines äußeren Rohres (4) gleichen Durchmesser mit Lot an den das Trennrohr (1) berührenden Stellen haben, daß die Wicklungen (6, 7) durch Aufbringen von Hitze auf die mit Lot versehen Stellen mit dem Trennrohr (1) verlötet und daß die Einheit aus Rohr (1), Seelenelement (5) und Drahtwicklungen (6, 7) in das äußere Rohr (4) eingeschoben wird.

2. Verfahren nach Anspruch 1, dadurch gekennzeichnet, daß die Lötstellen der benachbarten inneren und äußeren Wicklungen (6, 7) gleichzeitig erhitzt werden.

3. Verfahren nach Anspruch 2, dadurch gekennzeichnet, daß die inneren Wicklungen (7) vor dem Einbau in das Trennrohr (1) an dem Seelenelement (5) befestigt werden.

4. Ein nach einem der Ansprüche 1 bis 3 hergestellter Wärmetauscher mit einem Trennrohr (1), das zwei Fließräume (2, 3) für Wärmeaustauschmittel trennt, welches an seiner Innen- und Außenseite mit wärmeleitenden Metallelementen (6, 7) versehen ist, die in die betreffenden Räume (2, 3) reichen, wobei diese Element für die Wärmeaustauschmittel durchlässig und auf wärmeleitende Art und Weise, insbesondere durch Löten, an diesem Rohr befestigt sind, dadurch gekennzeichnet, daß sowohl das äußere als auch das innere Element (6, 7) aus Drahtwicklungen besteht, die einen Teil kontinuierlich gewundener Drahtwicklungen bilden, welche Wicklungen (6, 7) an die äußere bzw. innere Wand des Trennrohres (1) gelötet sind, daß ferner die äußeren Drahtwicklungen (6) von einem äußeren Rohr (4) umgeben sind, das mit dem Trennrohr (1) einen äußeren Strömungskanal (2) bildet.

5. Wärmeaustauscher nach Anspruch 4, dadurch gekennzeichnet, daß ein Seelenelement (5), insbesondere ein inneres Rohr, innerhalb der inneren Wicklungen (7) angebracht ist und sie berührt.

6. Wärmeaustauscher nach Anspruch 5, dadurch gekennzeichnet, daß die inneren Wicklungen (7) am Seelenelement (5) befestigt sind.

7. Gastrockengerät mit einer Kompressionspumpe (8) für den Dampf eines Kühlmittels, einem Ausdehnungsventil (12) zum Drosseln des sich ausdehnenden, komprimierten Dampfes und einem mit dem Ventil verbundenen Verdampfer, in dem der sich ausdehnende Dampf mit dem zu behandelnden Gas eine Wechselwirkung eingehen kann, um ihm Wärme zu entziehen, wobei das Auslaßende des Verdampfers mit der Ansaugseite der Pumpe verbunden ist und ferner in diesen Zyklus ein Kühler (9) zum Entfernen der bei der Kompression des Kühlmitteldampfes erzeugten Wärme eingeschaltet ist, dadurch gekennzeichnet, daß der Verdampfer durch den Wärmetauscher nach einem der Ansprüche 4 bis 6 gebildet ist.

8. Gastrockner nach Anspruch 7, dadurch gekennzeichnet, daß der Dampf des Kühlmittels durch den inneren Kanal (3) in der gleichen Richtung geleitet wird, wie das Gas durch den äußeren Kanal (2) geleitet wird, wobei der Querschnitt des inneren Kanals (3) und die Dichte der darin befindlichen Drahtwicklungen (7) so ausgelegt sind, daß der Strömungswiderstand des Dampfes des Kühlmittels gegenüber dem des im wesentlichen flüssigen Kühlmittels so ansteigt, daß bei steigender Verdampfung als Folge einer steigenden Belastung die Ausströmtemperatur des Gasstroms fast immer den gleichen Wert hat.

0 083 954

Fig. 1

Fig. 2

Fig. 3

Fig. 4

1